(19) Europäisches Patentamt
European Patent Office
Office européen des brevets

(11) **EP 4 625 808 A1**

(12) **EUROPEAN PATENT APPLICATION**
published in accordance with Art. 153(4) EPC

(43) Date of publication:
01.10.2025 Bulletin 2025/40

(21) Application number: 23894164.5

(22) Date of filing: 27.06.2023

(51) International Patent Classification (IPC):
$H02P\ 21/05^{(2006.01)}$   $H02P\ 27/06^{(2006.01)}$
$H02M\ 7/48^{(2007.01)}$

(52) Cooperative Patent Classification (CPC):
H02P 21/05; H02M 7/48; H02P 6/10; H02P 21/18;
H02P 27/06

(86) International application number:
PCT/JP2023/023716

(87) International publication number:
WO 2024/111148 (30.05.2024 Gazette 2024/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 21.11.2022 JP 2022185834

(71) Applicant: Hitachi Industrial Equipment Systems
Co., Ltd.
Tokyo 101-0021 (JP)

(72) Inventors:
• TOBARI, Kazuaki
  Tokyo 100-8280 (JP)
• TAGUCHI, Yoshiyuki
  Tokyo 101-0021 (JP)
• IWASE, Yuta
  Tokyo 101-0021 (JP)

(74) Representative: MERH-IP Matias Erny Reichl
Hoffmann
Patentanwälte PartG mbB
Paul-Heyse-Straße 29
80336 München (DE)

(54) **POWER CONVERSION DEVICE**

(57) Provided is a power conversion device that realizes stable, highly accurate, and highly efficient control characteristics by suppressing pulsation in a speed of a driven motor and suppressing pulsation in torque. The power conversion device that drives a magnet motor includes: a first filter unit that includes a primary system transfer function filter that varies in correspondence with a pulsating component of the magnet motor, and computes a second speed estimation value from a speed command value and a first speed estimation value; a speed control unit that computes a first torque current command value from the speed command value and the second speed estimation value; and a second filter unit that includes a secondary system transfer function filter that varies in correspondence with the pulsating component, and computes a second torque current command value from the first torque current command value. Power to be supplied to the magnet motor is controlled on the basis of the second torque current command value.

FIG. 1

**Description**

TECHNICAL FIELD

The present invention relates to a power conversion device.

BACKGROUND ART

As a technology for controlling load torque pulsation of a compressor system or the like by position sensorless control, Patent Document 1 is known. Patent Document 1 discloses correction of a torque current command value that is an output of speed control by using a pulsating component extracted by a resonance filter that extracts a periodic pulsating component of a difference between a motor speed and a speed command.

CITATION LIST

PATENT DOCUMENT

Patent Document 1: JP 2006-191737 A

SUMMARY OF THE INVENTION

PROBLEMS TO BE SOLVED BY THE INVENTION

The technology described in Patent Document 1 can suppress pulsation in the motor speed by adding an output of a resonance filter and speed control, but does not mention suppression of pulsation in torque.
An object of the invention is to provide a power conversion device that realizes stable, highly accurate, and highly efficient control characteristics by suppressing pulsation in a speed of a driven motor, and pulsation in torque.

SOLUTIONS TO PROBLEMS

According to an aspect of the invention, there is provided a power conversion device that drives a magnet motor. The power conversion device includes: a first filter unit that includes a primary system transfer function filter that varies in correspondence with a pulsating component of the magnet motor, and computes a second speed estimation value from a speed command value and a first speed estimation value;

a speed control unit that computes a first torque current command value from the speed command value and the second speed estimation value; and
a second filter unit that includes a secondary system transfer function filter that varies in correspondence with the pulsating component, and computes a second torque current command value from the first torque current command value.

Power to be supplied to the magnet motor is controlled on the basis of the second torque current command value.

EFFECTS OF THE INVENTION

According to the invention, stable, highly accurate, and highly efficient control characteristics are realized by suppressing pulsation in a speed of a driven motor and pulsation in torque.

BRIEF DESCRIPTION OF THE DRAWINGS

Fig. 1 is a configuration diagram of a power conversion device according to Example 1.
Fig. 2 is a configuration diagram of a secondary system transfer function filter computation unit according to Example 1.
Fig. 3 is a configuration diagram of a primary system transfer function filter computation unit according to Example 1.
Fig. 4 is a view illustrating frequency characteristics of the secondary system transfer function filter computation unit in two suppression control modes.

Fig. 5 is a view illustrating control characteristics at 10% of a base speed in a case where Example 1 is not used.

Fig. 6 is a view illustrating control characteristics at 10% of the base speed in a case where the secondary system transfer function filter computation unit (control mode of suppressing pulsation in a speed) is used.

Fig. 7 is a view illustrating control characteristics at 50% of the base speed in a case where the secondary system transfer function filter computation unit (control mode of suppressing pulsation in a speed) is used.

Fig. 8 is a view illustrating frequency characteristics of a speed control system in a case where the secondary system transfer function filter computation unit (control mode of suppressing pulsation in a speed) is used.

Fig. 9 is a view illustrating frequency characteristics of the speed control system at 50% of the base speed in a case where the secondary system transfer function filter computation unit (control mode of suppressing pulsation in a speed) and the primary system transfer function filter computation unit are used.

Fig. 10 is a view illustrating control characteristics at 50% of a base frequency in a case where the secondary system transfer function filter computation unit (control mode of suppressing pulsation in a speed) and the primary system transfer function filter computation unit are used.

Fig. 11 is a view illustrating control characteristics at 90% of the base speed in a case where the secondary system transfer function filter computation unit (control mode of suppressing pulsation in torque) is not used.

Fig. 12 is a view illustrating control characteristics at 90% of the base speed in a case where the secondary system transfer function filter computation unit (control mode of suppressing pulsation in torque) is used.

Fig. 13 is a configuration diagram for verifying an example.

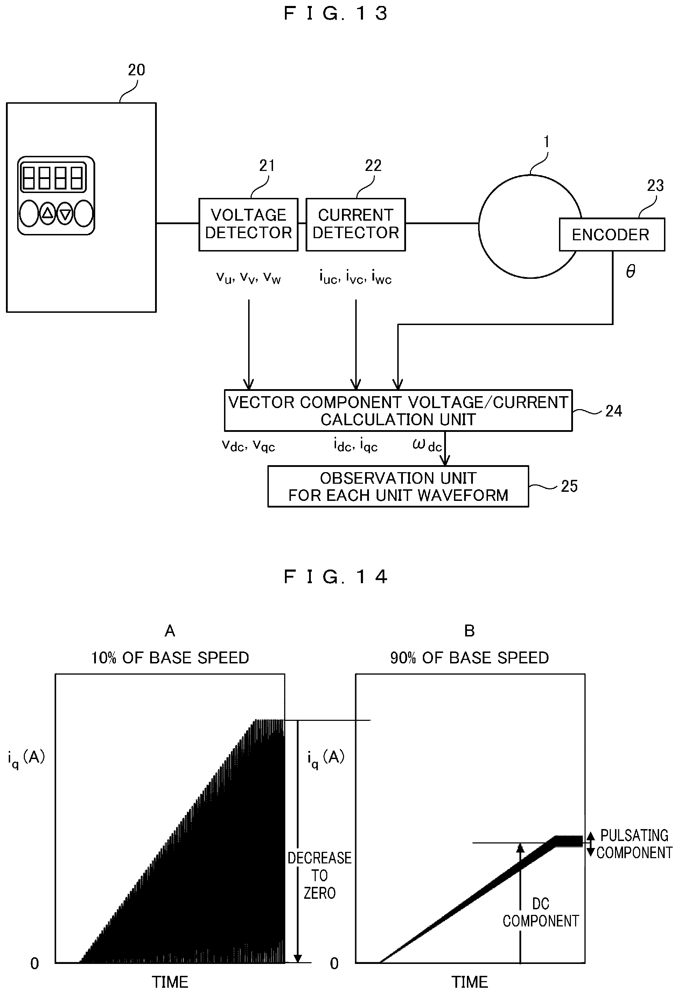

A in the Fig. 14 is a view illustrating a q-axis current waveform (10% of the base speed) for verification, and B in the Fig. 14 is a view illustrating a q-axis current waveform (90% of the base speed for verification.

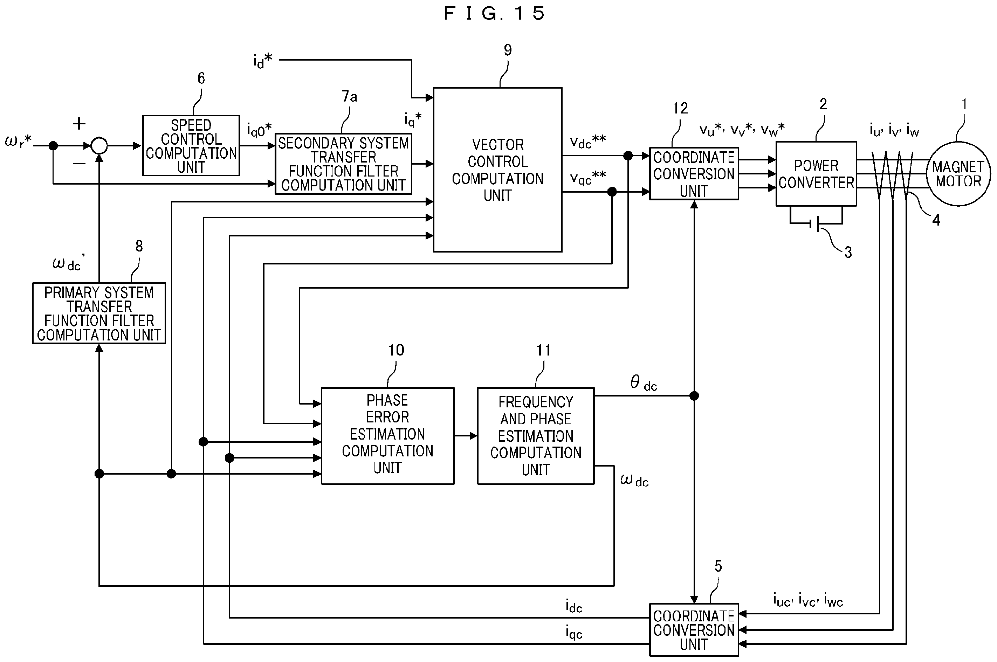

Fig. 15 is a configuration diagram of a power conversion device according to Example 2.

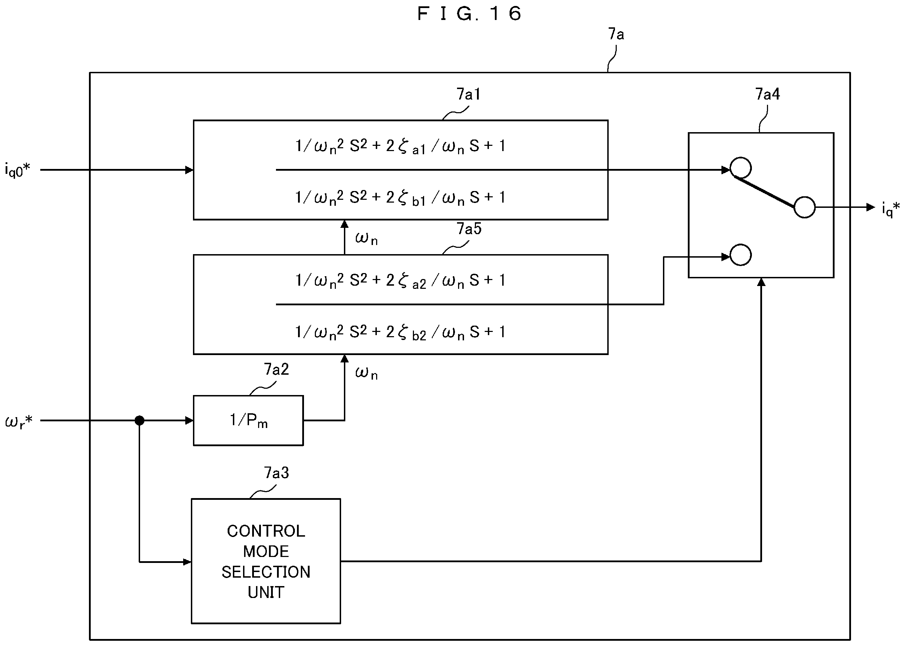

Fig. 16 is a configuration diagram of a secondary system transfer function filter computation unit according to Example 2.

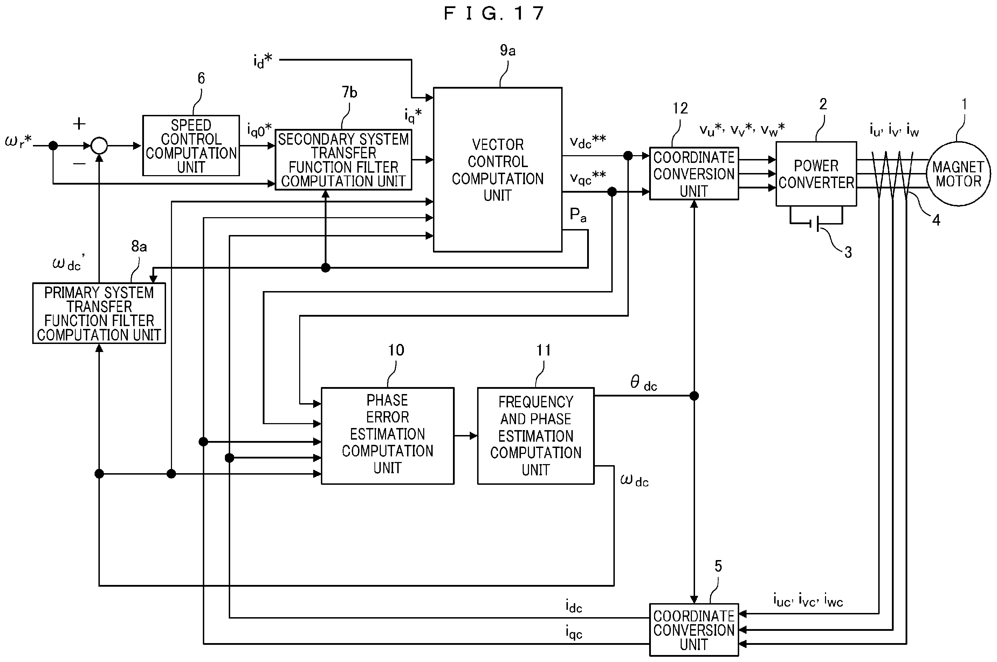

Fig. 17 is a configuration diagram of a power conversion device according to Example 3.

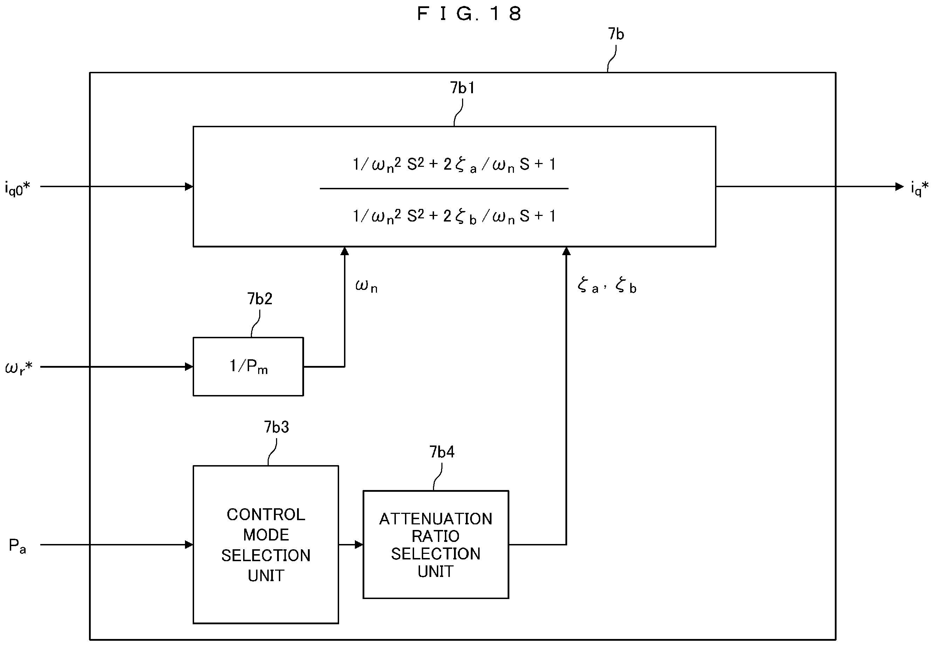

Fig. 18 is a configuration diagram of a secondary system transfer function filter computation unit according to Example 3.

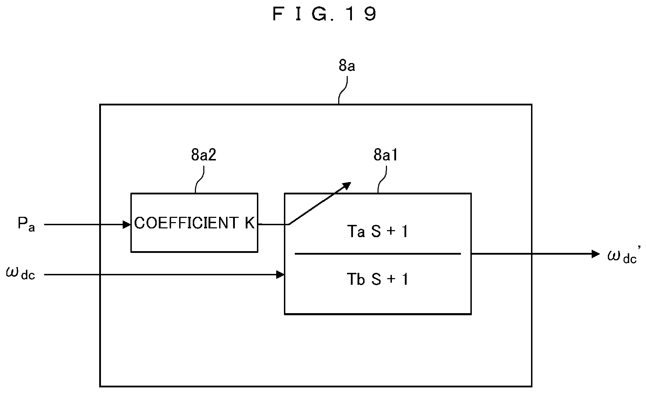

Fig. 19 is a configuration diagram of a primary system transfer function filter computation unit according to Example 3.

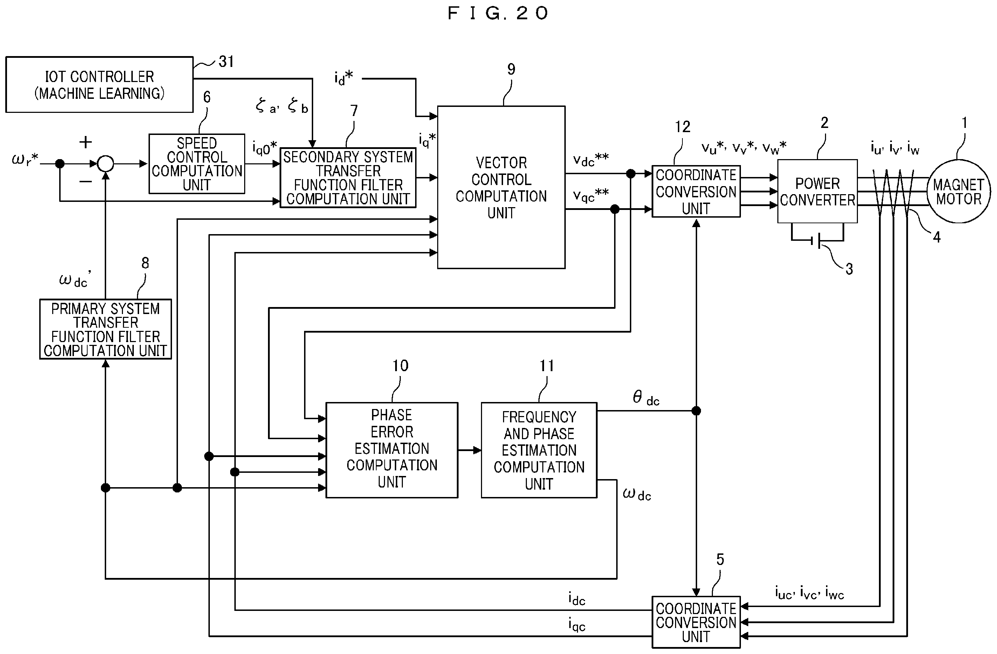

Fig. 20 is a configuration diagram of a power conversion device according to Example 4.

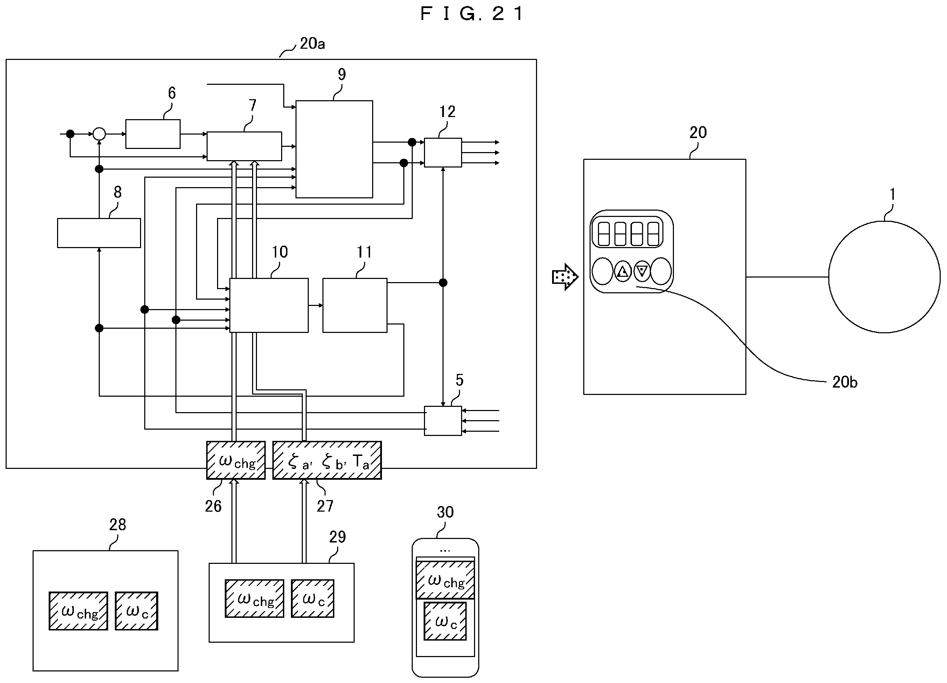

Fig. 21 is a configuration diagram of a power conversion device according to Example 5.

MODE FOR CARRYING OUT THE INVENTION

Hereinafter, examples will be described in detail with reference to the accompanying drawings. In addition, in the drawings, the same reference numeral is given to a common configuration. In addition, the following examples are not limited to configurations illustrated in the drawings.

Example 1

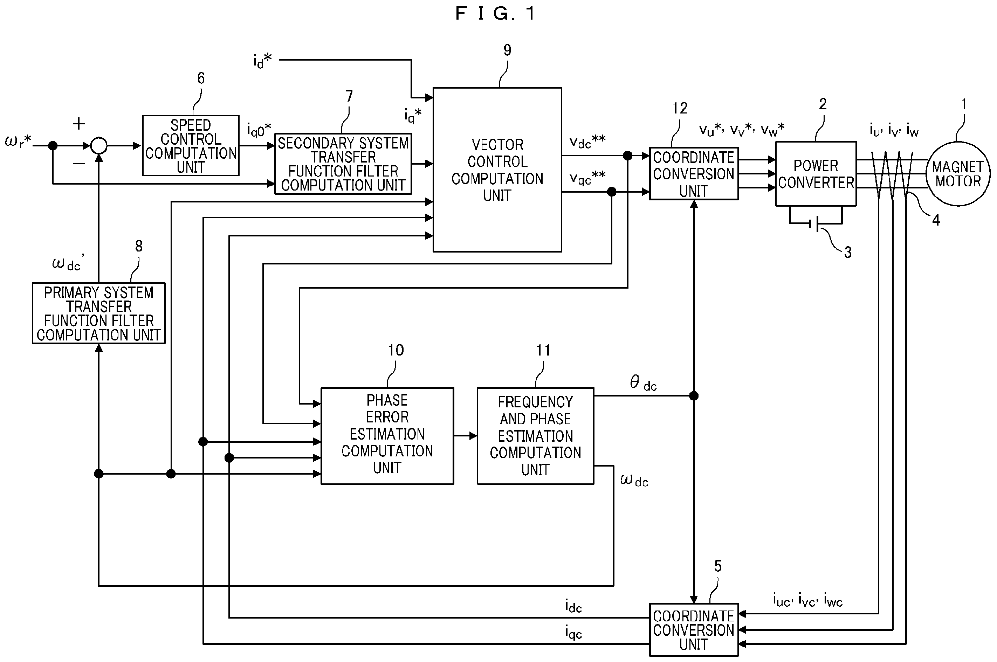

Fig. 1 is a configuration diagram of a power conversion device and a magnet motor according to Example 1.

A magnet motor 1 outputs motor torque that is a combination of a torque component due to a magnetic flux of a permanent magnet and a torque component due to inductance of armature winding.

A power converter 2 outputs voltage values proportional to three-phase AC voltage command values $v_u^*$, $v_v^*$, $v_w^*$, and varies an output voltage value and an output frequency value of the magnet motor 1.

A DC power supply 3 supplies a DC voltage to the power converter 2.

A current detector 4 outputs $i_{uc}$, $i_{vc}$, $i_{wc}$ which are detection values of three-phase AC currents $i_u$, $i_v$, $i_w$ of the magnet motor 1. The current detector 4 may also detect AC currents of two phases among the three phases of the magnet motor 1, for example, the u-phase and the w-phase, and a v-phase AC current may be obtained as $i_v = - (i_u + i_w)$ from an AC condition ($i_u + i_v + i_w = 0$). In this embodiment, the current detector 4 is provided inside the power conversion device as an example, but may also be provided outside the power conversion device.

A coordinate conversion unit 5 outputs d-axis and q-axis current detection values $i_{dc}$ and $i_{qc}$ from the detection values $i_{uc}$, $i_{vc}$, and $i_{wc}$ of the three-phase AC currents $i_u$, $i_v$, and $i_w$, and a phase estimation value $\theta_{dc}$.

A speed control computation unit 6 computes a difference between a speed command value $\omega_r^*$ and a new speed estimation value $\omega_{dc}'$, and computes and outputs a first torque current command value $i_{q0}^*$ based on the difference (deviation).

A secondary system transfer function filter computation unit 7 outputs the first torque current command value $i_{q0}^*$, the speed command value $\omega_r^*$, and a second torque current command value $i_q^*$ calculated based on a secondary system transfer function filter of a Laplace operator s.

A primary system transfer function filter computation unit 8 outputs the new speed estimation value $\omega_{dc}'$ based on

a speed estimation value $\omega_{dc}$ and a primary system transfer function filter of the Laplace operator s.

A vector control computation unit 9 outputs d-axis and q-axis voltage command values $v_{dc}^{**}$ and $v_{qc}^{**}$ computed based on the d-axis current command value $i_d^*$, the q-axis current command value (second torque current command value) $i_q^*$, the current detection values $i_{dc}$ and $i_{qc}$, the new speed estimation value $\omega_{dc}'$, and electrical circuit parameters of the magnet motor 1.

A phase error estimation computation unit 10 uses voltage command values $v_{dc}^{**}$ and $v_{qc}^{**}$ of a $d_c$-axis and a $q_c$-axis which are the control axes, the speed estimation value $\omega_{dc}$, the current detection values $i_{dc}$ and $i_{qc}$, and the electrical circuit parameters of the magnet motor 1 to output an estimation value $\Delta\theta_c$ of a phase error $\Delta\theta$, which is a deviation between the phase $\theta_{dc}$ of the control axis and a phase $\theta_d$ of a magnet of the magnet motor 1.

A frequency and phase estimation computation unit 11 outputs a speed estimation value $\omega_{dc}$ and a phase estimation value $\theta_{dc}$ based on the phase error estimation value $\Delta\theta_c$.

A coordinate conversion unit 12 outputs three-phase AC voltage command values $v_u^*$, $v_v^*$, and $v_w^*$ based on the $d_c$-axis and $q_c$-axis voltage command values $v_{dc}^{**}$ and $v_{qc}^{**}$, and the phase estimation value $\theta_{dc}$.

First, description will be given of a basic operation of a sensorless vector control method using the secondary system transfer function filter computation unit 7 and the primary system transfer function filter computation unit 8 which are characteristics of this example.

The speed control computation unit 6 computes a first q-axis current command value $i_{q0}^*$ in accordance with (Mathematical Formula 1) by proportional control and integral control so that the new speed estimation value $\omega_{dc}'$ to be described later conforms to the speed command value $\omega_r^*$.

[Mathematical Formula 1]

$$i_{q0}{}^* = \left( \omega_r{}^* - \omega_{dc}{}' \right)\left( K_{sp} + \frac{K_{si}}{s} \right) \quad ---- (1)$$

Here,

$K_{sp}$: Proportional gain of speed control, $K_{si}$: integral gain of speed control, and s: Laplace operator.

Next, description will be given of the secondary system transfer function filter computation unit 7 that is one characteristic of the invention.

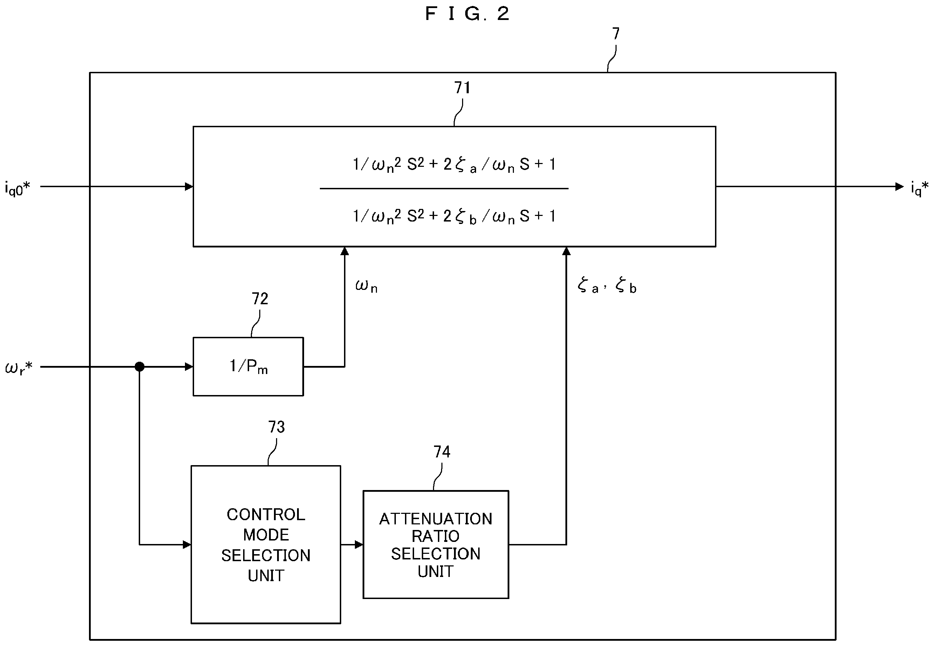

Fig. 2 is a configuration diagram of the secondary system transfer function filter computation unit 7.

In the secondary system transfer function filter computation unit 7, the second torque current command value $i_q^*$ is computed in accordance with (Mathematical Formula 2) by using the first q-axis current command value $i_{q0}^*$, a pulsating component $\omega_n$ that is a mechanical angular velocity of the magnetic motor 1, and attenuation ratios $\zeta_a$ and $\zeta_b$ in a secondary system transfer function filter 71 of the Laplace operator s.

[Mathematical Formula 2]

$$i_q{}^* = \left[ \frac{1/\omega_n s^2 + 2\zeta_a/\omega_n s + 1}{1/\omega_n s^2 + 2\zeta_b/\omega_n s + 1} \right] i_{q0}{}^* \quad ---- (2)$$

A mechanical angular velocity conversion unit 72 computes a pulsating component $\omega_n$ that is a value of the number of pole pairs $P_m$ of the magnet motor 1 and is set to the secondary system transfer function filter 71 in accordance with (Mathematical Formula 3).

[Mathematical Formula 3]

$$\omega_n = \frac{1}{P_m}\omega_r{}^* \quad ---- (3)$$

A control mode selection unit 73 determines a low-speed region and a high-speed region in accordance with the magnitude of the speed command value $\omega_r^*$. When it is determined as the low-speed region, "control mode for suppressing pulsation in a speed" of the magnetic motor 1 is selected, and when it is determined as the high-speed region, "control mode for suppressing pulsation in torque" is selected.

An attenuation ratio selection unit 74 sets the attenuation ratios $\zeta_a$ and $\zeta_b$ relating to the control mode for suppressing pulsation in a speed when the "control mode for suppressing pulsation in a speed" is selected, and sets the attenuation ratios $\zeta_a$ and $\zeta_b$ relating to the control mode for suppressing pulsation in a speed when the "control mode for suppressing pulsation in torque" is selected. The secondary system transfer function filter 71 includes a pulsating component $\omega_n$ as a parameter, and varies in correspondence with the pulsating component.

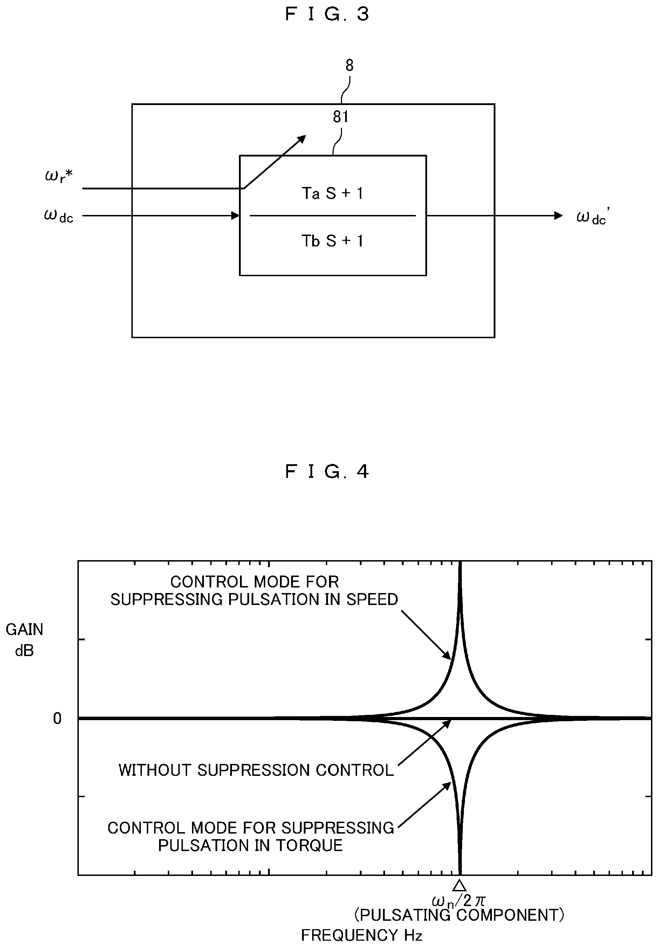

Fig. 3 illustrates a block of the primary system transfer function filter computation unit 8.

In the primary system transfer function filter computation unit 8, the new speed estimation value $\omega_{dc}'$ is computed in accordance with (Mathematical Formula 4) by using the speed command value $\omega_r{}^*$, the speed estimation value $\omega_{dc}$, a progress time constant $T_a$, and a delay time constant $T_b$ in the primary system transfer function filter 81 of the Laplace operator s.

[Mathematical Formula 4]

$$\omega_{dc}{}' = \left[ \frac{T_a s + 1}{T_b s + 1} \right] \omega_{dc} \quad ---- (4)$$

In the primary system transfer function filter computation unit 8, the progress time constant $T_a$ is computed in accordance with (Mathematical Formula 5).

[Mathematical Formula 5]

$$T_a \infty \frac{P_m}{\omega_r{}^*} \quad ---- (5)$$

progress time constant $T_a$ may be a value that is inversely proportional to the pulsating component $\omega_n$ that is a mechanical angular velocity. The delay time constant $T_b$ may be sufficiently shorter than $T_a$. For example, the delay time constant $T_b$ may be a time constant (hereinafter, referred to as a response time constant of current control) corresponding to a response frequency of current control. From (Mathematical Formula 5), the progress time constant $T_a$ in a primary system transfer function filter 81 varies in correspondence with a pulsating component of the magnet motor. The primary progress time constant $T_a$ may be rewritten based on the speed command value.

Fig. 4 illustrates frequency characteristics related to the two control modes in the secondary system transfer function filter computation unit. The frequency characteristics are a gain characteristic and a phase characteristic from input $i_{q0}{}^*$ to an output $i_q{}^*$ illustrated in Fig. 2.

A "control mode for suppressing pulsation in a speed" is set so that a gain becomes maximum at the pulsating component $\omega_n$, and a "control mode for suppressing pulsation in torque" is set so that a gain becomes minimum at the pulsating component $\omega_n$. The characteristics can be obtained in accordance with setting of the attenuation ratios $\zeta_a$ and $\zeta_b$.

In the vector control computation unit 9, first, $d_c$-axis and $q_c$-axis voltage reference values $v_{dc}{}^*$ and $v_{qc}{}^*$ are output in accordance with (Mathematical Formula 6) by using a setting value $R^*$ of coil resistance that is an electrical circuit parameter of the permanent magnet motor 1, a setting value $L_d{}^*$ of d-axis inductance, a setting value $L_q{}^*$ of q-axis inductance, a setting value $K_e{}^*$ of an induced voltage coefficient, $d_c$-axis and $q_c$-axis current command values $i_d{}^*$ and $i_q{}^*$, and the speed estimation value $\omega_{dc}$.

[Mathematical Formula 6]

$$\left[ \begin{array}{l} v_{dc}{}^* = R^* i_d{}^* - \omega_{dc} L_q{}^* \dfrac{1}{1 + T_{acr} s} i_q{}^* \\[2ex] v_{qc}{}^* = R^* i_q{}^* + \omega_{dc} \left( L_d{}^* \dfrac{1}{1 + T_{acr} s} i_d{}^* + K_e{}^* \right) \end{array} \right] \quad ---- (6)$$

Here, $T_{acr}$: response time constant of current control.

Second, $d_c$-axis and $q_c$-axis voltage correction values $\Delta v_{dc}$ and $\Delta v_{qc}$ are computed in accordance with (Mathematical Formula 7) by proportional control and integral control so that the current detection values $i_{dc}$ and $i_{qc}$ of respective components conform to the $d_c$-axis and $q_c$-axis current command values $i_d{}^*$ and $i_q{}^*$.

[Mathematical Formula 7]

$$\begin{bmatrix} \Delta v_{dc} = \left( K_{pd} + \dfrac{K_{id}}{s} \right)\left( i_d{}^* - i_{dc} \right) \\ \Delta v_{qc} = \left( K_{pq} + \dfrac{K_{iq}}{s} \right)\left( i_q{}^* - i_{qc} \right) \end{bmatrix} \ ---- (7)$$

Here,

$K_{pd}$: proportional gain of $d_c$-axis current control, $K_{id}$: integral gain of $d_c$-axis current control,
$K_{pq}$: proportional gain of $q_c$-axis current control, $K_{iq}$: integral gain of $q_c$-axis current control,
in addition, $d_c$-axis and $q_c$-axis voltage command values $v_{dc}{}^{**}$ and $v_{qc}{}^{**}$ are computed in accordance with (Mathematical Formula 8).

[Mathematical Formula 8]

$$\begin{bmatrix} v_{dc}{}^{**} = v_{dc}{}^* + \Delta v_{dc} \\ v_{qc}{}^{**} = v_{qc}{}^* + \Delta v_{qc} \end{bmatrix} \ ---- (8)$$

In the phase error estimation computation unit 10, the phase error estimation value $\Delta\theta_c$ is computed in accordance with an extended induced voltage formula (Mathematical Formula 9) on the basis of the $d_c$-axis and $q_c$-axis voltage command values $v_{dc}{}^{**}$ and $v_{qc}{}^{**}$, the current detection values $i_{dc}$ and $i_{qc}$, the speed estimation value $\omega_{dc}$, and the electrical circuit parameters ($R^*$ and $L_q{}^*$) of the magnet motor 1.
[Mathematical Formula 9]

$$\Delta\theta_c = \tan^{-1}\left( \frac{v_{dc}{}^{**} - R^* i_{dc} + \omega_{dc} L_q{}^* i_{qc}}{v_{qc}{}^{**} - R^* i_{qc} - \omega_{dc} L_q{}^* i_{dc}} \right) \ --- (9)$$

The frequency and phase estimation computation unit 11 computes the speed estimation value $\omega_{dc}$ in accordance with (Mathematical Formula 10) by P (proportional) + I (integral) control so that the above-described phase error estimation value $\Delta\theta_c$ conforms to a command value $\Delta\theta_c{}^*$ (= 0) thereof. In addition, the frequency and phase estimation computation unit 11 computes the phase estimation value $\theta_{dc}$ in accordance with (Mathematical Formula 11) by I (integral) control.
[Mathematical Formula 10]

$$\omega_{dc} = \left( Kp_{pll} + \frac{Ki_{pll}}{s} \right)\left( \Delta\theta_c{}^* - \Delta\theta_c \right) \ --- (10)$$

[Mathematical Formula 11]

$$\theta dc = \frac{1}{s} \cdot \omega_{dc} \ --- (11)$$

Here, $Kp_{pll}$: proportional gain of PLL control, $Ki_{pll}$: integral gain of PLL control.

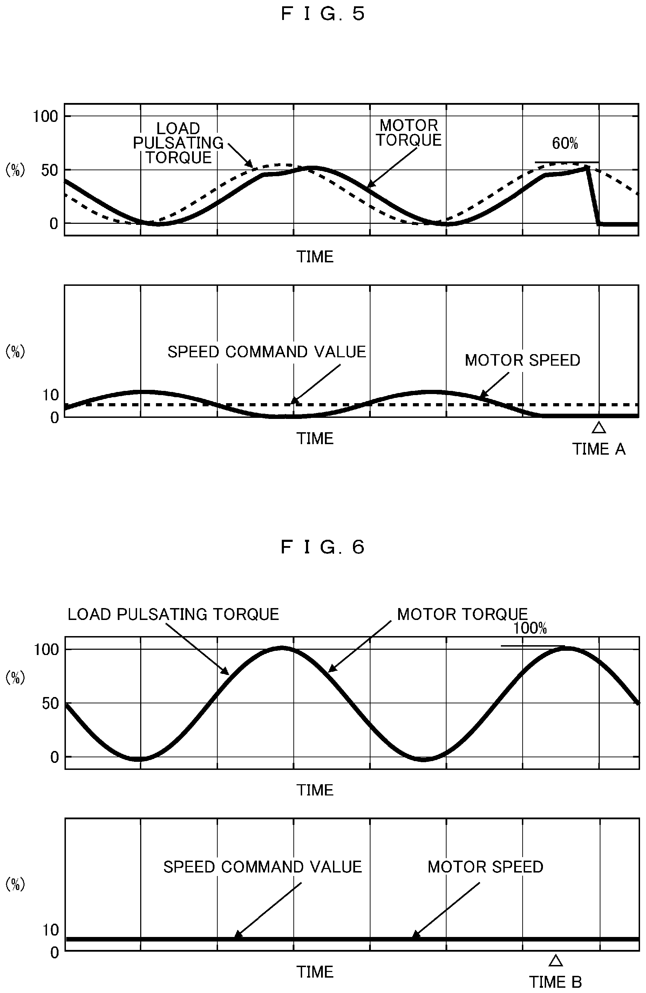

Next, description will be given of the principle by which the invention provides highly stable, highly accurate, and highly efficient control characteristics. Fig. 5 illustrates control characteristics in a low-speed region when the secondary system transfer function filter computation unit 7, and the primary system transfer function filter computation unit 8 of the example are not used, and load pulsating torque is present. The pulsating load torque is a total of 100% including a maximum of 50% of DC component and a maximum of 50% of pulsating component, and is applied in a lamp shape.

Fig. 5 shows simulation results when the speed command value is set to 10% of the base speed. In the same drawing, an upper stage shows the load pulsating torque and the motor torque, and a lower stage shows the speed command value and the motor speed. At this time, a maximum value of the load pulsating torque is approximately 60%, but at near time A in the drawing, the motor speed decelerates to near zero, and the magnet motor 1 steps out and enters a stopped state.

Fig. 6 illustrates control characteristics when selecting the "control mode for suppressing pulsation in a speed" by using the secondary system transfer function filter computation unit 7 and without using the primary system transfer function filter computation unit 8. Fig. 6 shows simulation results when the speed command is set to 10% of the base speed as in Fig. 5. A maximum value of the load pulsating torque increases to 100% at near time B, but a gain for the pulsating component of a speed increases due to an effect of the secondary system transfer function filter computation unit 7, and thus the motor torque conforms to the load pulsating torque, and the pulsating width of the speed can be reduced to approximately zero. At 10% of the base speed, highly stable and highly accurate operation is realized even though the primary system transfer function filter computation unit 8 is not used.

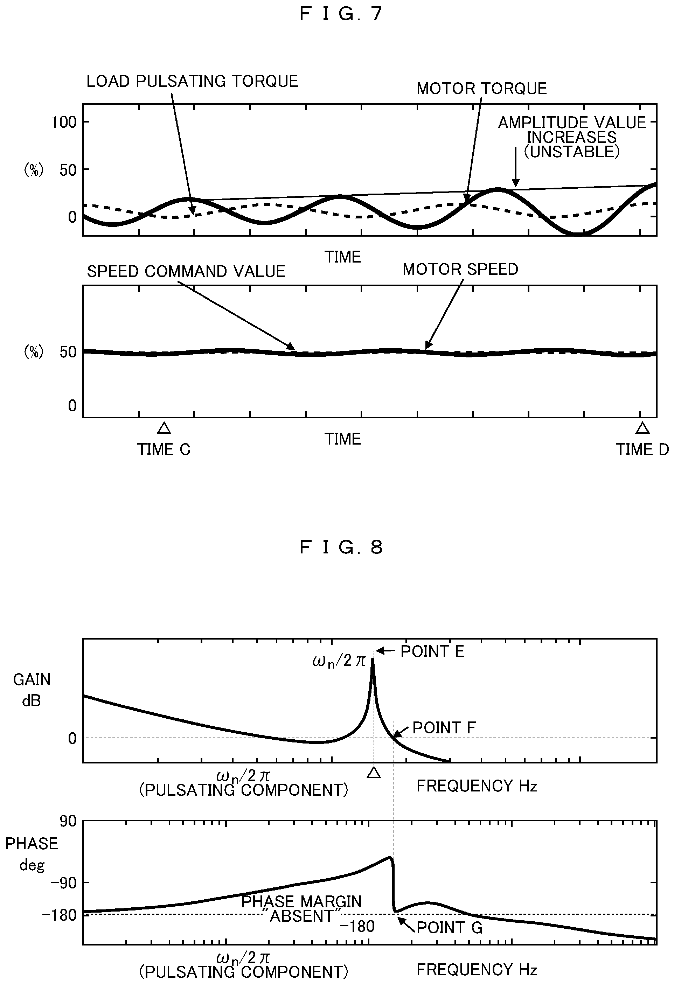

In addition, Fig. 7 illustrates control characteristics when load pulsating torque is present in a case where the secondary system transfer function filter computation unit 7 of this example is used and the primary system transfer function filter computation unit 8 is not used at 50% of the base speed. Even in the same drawing, an upper stage shows the load pulsating torque and the motor torque, and a lower stage shows the speed command value and the motor speed. When reaching 50% of the base speed, as compared with Fig. 4 at 10% of the base speed, the motor torque does not conform to the load pulsating torque and an amplitude value of the motor torque gradually increases from time C to time D.

Fig. 8 illustrates frequency characteristics when the secondary system transfer function filter computation unit 7 of this example is used, the primary system transfer function filter computation unit 8 is not used, and the "control mode for suppressing pulsation in a speed" is selected. In Fig. 8, the horizontal axis represents a frequency of the magnet motor, and a gain characteristic and a phase characteristic from the speed command value $\omega_r{}^*$ to the speed estimation value $\omega_{dc}$ are shown.

In the gain characteristic at the upper stage, the gain is maximized at a point E for the pulsating component $\omega_n$, and at a crossover frequency that is a frequency point F where the gain is 0 dB (gain = 1), the phase characteristic at the lower stage is -180 degrees near a point G. According to this, it is clear that a phase margin of the control system is insufficient and the speed control system is unstable.

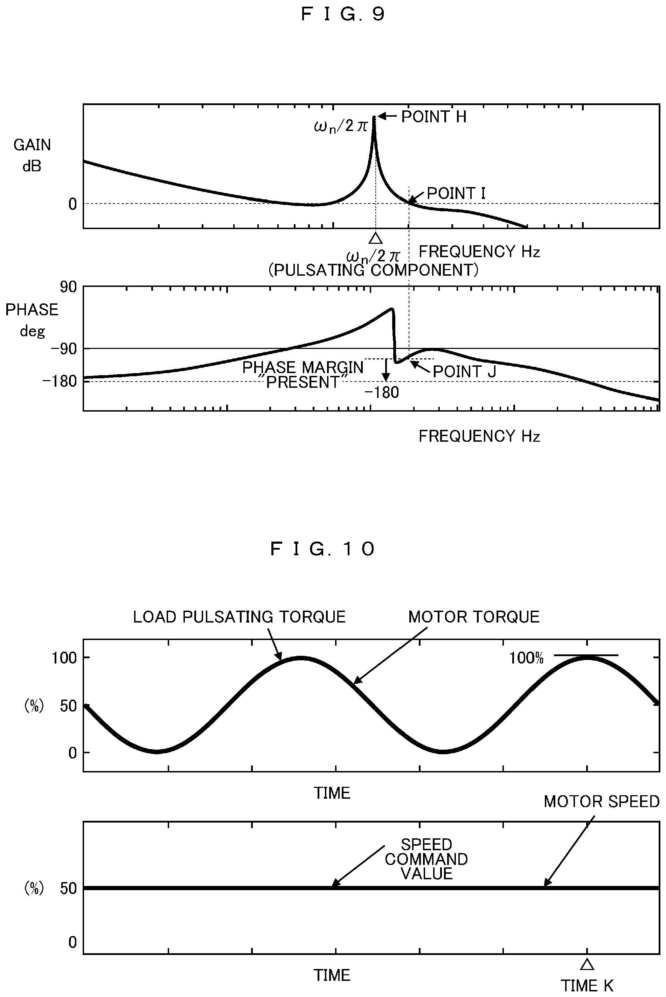

Fig. 9 illustrates frequency characteristics when the secondary system transfer function filter computation unit 7 and the primary system transfer function filter computation unit 8 of this example are used, and the "control mode for suppressing pulsation in a speed" is selected. In Fig. 9, the horizontal axis represents a magnet motor frequency, and a gain characteristic and a phase characteristic from the speed command value $\omega_r{}^*$ to the speed estimation value $\omega_{dc}$ are shown.

In the gain characteristic at the upper stage, the gain is maximized at a point H for the pulsating component $\omega_n$, and at a crossover frequency that is a frequency point I where the gain is 0 dB (gain = 1), and in the phase characteristic at the lower stage, the phase margin near a point J is improved. That is, at 50% of the base speed, it is clear that the speed control system is stable due to an effect of the primary system transfer function filter computation unit 8.

Fig. 10 illustrates simulation results when the secondary system transfer function filter computation unit 7 and the primary system transfer function filter computation unit 8 of this example are used, and the "control mode for suppressing pulsation in a speed" is selected at 50% of the base speed. Although the maximum value of the load pulsating torque increases to 100% at time K, a gain for a speed pulsating component increases, and thus the motor torque conforms to the load pulsating torque and the speed pulsating width can be reduced to approximately zero. When using the primary system transfer function filter computation unit 8, a highly stable and highly accurate operation can be realized.

That is, when the motor speed increases, it is necessary to improve the frequency characteristics of the speed control system, and thus the primary system transfer function filter computation unit 8 is essential. The reason for this is that the frequency characteristics of the speed control system are affected by a control band that varies depending on the response frequency $F_{PLL}$ set in the frequency and phase estimation computation unit 11.

When the magnitude $|\omega_{dc}|$ of the speed estimation value $\omega_{dc}$ and the response frequency $F_{PLL}$ have a relationship of (Mathematical Formula 12), the primary system transfer function filter computation unit 8 may be used.

[Mathematical Formula 12]

$$\left|\frac{\omega_{dc}}{2\pi}\right| < F_{PLL} \quad ---(12)$$

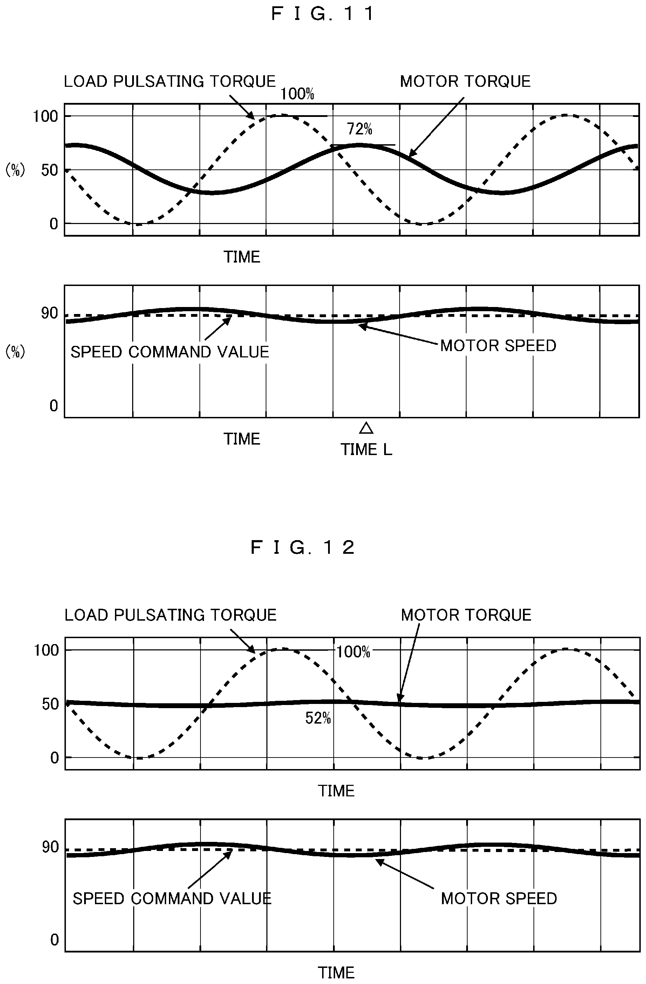

Fig. 11 illustrates control characteristics when load pulsating torque is present in a case where the secondary system transfer function filter computation unit 7 and the primary system transfer function filter computation unit 8 of this example are not used at 90% of the base speed. Fig. 11 shows simulation results when the speed command value is set to 90% of the base speed. In Fig. 11, an upper stage shows the load pulsating torque and the motor torque, and the lower stage shows the speed command value and the motor speed. When the speed reaches 90% of the base speed, the pulsation of the motor torque decreases as compared with when the speed is 10% (Fig. 5). This is because it moves away from the control band of the speed control computation unit 6.

Due to an influence of the pulsating load torque, the maximum value of the motor torque at time L in the same drawing is approximately 72%. At this time, an output P of the motor is generated by a motor speed $\omega_r$ and torque $\tau_m$ in accordance with a relationship of (Mathematical Formula 13).

[Mathematical Formula 13]

$$P = \omega_r \cdot \frac{1}{P_m} \cdot \tau_m \quad ---(13)$$

Therefore, in the high-speed region, the pulsation of the motor output P is large, and the motor efficiency is not good. Fig. 12 illustrates control characteristics when the secondary system transfer function filter computation unit 7 of this example is used and the "control mode for suppressing pulsation in torque" is selected. As in Fig. 11, the speed command value is set to 90% of the base speed. In order to reduce the gain for the pulsating component $\omega_n$, the maximum value of the motor torque is 52%, and as compared with Fig. 11, the torque pulsating width is significantly reduced from 22% (= 72 - 50) to 2% (= 52 - 50), the pulsation of the motor output P is reduced, and stable and highly efficient operation can be realized.

It can be seen that the effect of the invention is clear by selecting the "control mode for suppressing pulsation in a speed" when the motor is a low-speed region and the "control mode for controlling pulsation in torque" when the motor is a high-speed region.

In this example, as an example, it is assumed that a region where the magnitude of the speed command value $\omega_r{}^*$ is 10% or 50% of the base speed is the low-speed region, and a region where the magnitude is 50% or more of the base speed is the high-speed region, but a region where the magnet motor 1 steps out due to load pulsating torque may be set as the low-speed region, and a region equal to or faster than the region may be set as the high-speed region. In addition, the low-speed region and the high-speed region may be uniquely determined by the magnitude of the speed command value. In addition, the pulsating width of the motor speed $\omega_r$ and the motor torque $\tau_m$ can be intentionally controlled by changing the attenuation ratios $\zeta_a$ and $\zeta_b$ in correspondence with the magnitude of the speed command value $\omega_r{}^*$ or the speed estimation value $\omega_{dc}$.

According to this example, for example, in a case where a compressor system is driven by the magnet motor, it is possible to realize a power conversion device with highly stable, highly accurate, and highly efficient control characteristics from the low-speed region to the high-speed region by selecting the "control mode for suppressing pulsation in a speed" in the low-speed region of the magnet motor and the "control mode for suppressing pulsation in torque" in the high-speed region.

In addition, according to this example, when the compressor system is driven by a motor, pulsation in torque and speed of the motor, which occur in association with load torque pulsation that varies per one mechanical angular rotation, can be freely suppressed.

Description will be given of a verification method when this example is employed with reference to Fig. 13. A voltage detector 21 and a current detector 22 are attached to a power conversion device 20 that drives the magnet motor 1, and an encoder 23 is attached to a shaft of the magnet motor **1.**

Three-phase AC voltage detection values ($v_{uc}$, $v_{vc}$, and $v_{wc}$) which are outputs of the voltage detector 21, three-phase AC current detection values ($i_{uc}$, $i_{vc}$, and $i_{wc}$), and a position $\theta$ that is an output of the encoder are input to a vector component voltage/current calculation unit 24 to compute vector voltage components $v_{dc}$ and $v_{qc}$, vector current components $i_{dc}$ and $i_{qc}$, and a speed detection value $\omega_{rc}$ obtained by differentiating the position $\theta$.

The speed command value $\omega_r{}^*$ applied to a controller of the power converter 2 is set to, for example, approximately 50% of the base speed, and the compressor embedded with the magnet motor 1 is driven.

When the magnitude $|\omega_{rc}|$ of the speed detection value $\omega_{rc}$ and the response frequency $F_{PLL}$ set in the power conversion device 20 have a relationship of (Mathematical Formula 14), there is a high possibility that the primary system transfer function filter computation unit 8 is being used.

[Mathematical Formula 14]

$$\left|\frac{\omega_{rc}}{2\pi}\right| < F_{PLL} \quad ---(14)$$

A in the Fig. 14 illustrates a waveform of a vector current component $i_{qc}$ when the speed command value $\omega_r^*$ is set to 10% of the base speed and the compressor embedded with the magnet motor 1 is driven. Since the vector current component $i_{qc}$ is proportional to the load pulsating torque, the vector current component $i_{qc}$ becomes a waveform that decreases to approximately zero.

B in the Fig. 14 illustrates a waveform of the vector current component $i_{qc}$ when the speed command value $\omega_r^*$ is set to 90% of the base speed, and the compressor embedded with the magnet motor 1 is driven. Since the vector current component $i_{qc}$ is not related to the load pulsating torque, $i_{qc}$ becomes an approximately DC component, and a pulsating component becomes 10% or less of a DC component.

When conducting the same test by setting the magnitude of the speed command value to for every 10% of the base speed, a state of a control mode including the "control mode for suppressing pulsation in a speed" and the "control mode for suppressing pulsation in torque" becomes clear. Although the waveform of the vector current component $i_{qc}$ has been observed, but a waveform of the speed detection value $\omega_{rc}$ may be observed.

Example 2

Fig. 15 is a configuration diagram of a power conversion device and a magnet motor according to Example 2. In Example 1, the attenuation ratios $\zeta_a$ and $\zeta_b$ set to the secondary system transfer function filter 71 of the secondary system transfer function filter computation unit 7 are switched to the "control mode for suppressing pulsation in a speed" in the low-speed region and to the "control mode for suppressing pulsation in torque" in the high-speed region by using the speed command value.

In this example, two secondary system transfer function filters 7a1 and 7a5 are provided in the secondary system transfer function filter computation unit 7a, and the two filters are switched between the low-speed region and the high-speed region, respectively. A magnet motor 1, a speed control computation unit 6, and a primary system transfer function filter computation unit 8 to a coordinate conversion unit 12 in Fig. 15 are the same as those in Fig. 1. Fig. 16 illustrates a configuration of the secondary system transfer function filter computation unit 7a.

In the secondary system transfer function filter computation unit 7a, a second torque current command value $i_{q1}^*$ is computed in accordance with (Mathematical Formula 15) by using a first q-axis current command value $i_{q0}^*$, a pulsating component $\omega_n$, and attenuation ratios $\zeta_{a1}$ and $\zeta_{b1}$ of the "control mode for suppressing pulsation in a speed" in the secondary system transfer function filter 7a1 of the Laplace operator s.

[Mathematical Formula 15]

$$i_{q1}^* = \frac{1/\omega_n s^2 + 2\zeta_{a1}/\omega_n s + 1}{1/\omega_n s^2 + 2\zeta_{b1}/\omega_n s + 1} i_{q0}^* \quad ---(15)$$

In addition, a second torque current command value $i_{q2}^*$ is computed in accordance with (Mathematical Formula 16) by using the first q-axis current command value $i_{q0}^*$, the pulsating component $\omega_n$, and attenuation ratios $\zeta_{a2}$ and $\zeta_{b2}$ of the "control mode for suppressing pulsation in torque" in the secondary system transfer function filter 7a5.

[Mathematical Formula 16]

$$i_{q2}^* = \frac{1/\omega_n s^2 + 2\zeta_{a2}/\omega_n s + 1}{1/\omega_n s^2 + 2\zeta_{b2}/\omega_n s + 1} i_{q0}^* \quad ---(16)$$

A mechanical speed conversion unit 7a2 computes the pulsating component $\omega_n$ that is a value of the number of pole pairs $P_m$ of the magnet motor 1 and is set to the secondary system transfer function filter 7a1 in accordance with (Mathematical Formula 3) described above.

A control mode selection unit 7a3 determines the low-speed region and the high-speed region in accordance with the magnitude of the speed command value $\omega_r{}^*$. The control mode selection unit 7a3 selects the "control mode for suppressing pulsation in a speed" In a case where it is determined as the low-speed region, and the "control mode for suppressing pulsation in torque" in a case where it is determined as the high-speed region.

In a case where the control mode selection unit 7a3 selects the "control mode for suppressing pulsation in a speed", a filter switching unit 7a4 outputs $i_{q1}{}^*$ that is an output of the secondary system transfer function filter 7a1 as a q-axis current command values $i_q{}^*$. In addition, in a case where the "control mode for suppressing pulsation in torque" is selected, the filter switching unit 7a4 outputs $i_{q2}{}^*$ that is an output of the secondary system transfer function filter 7a5 as a q-axis current command values $i_q{}^*$. Even using this example in which two secondary system transfer function filters are prepared and are switched between the low-speed region and the high-speed region, stable, highly accurate, and highly efficient control characteristics can be realized as in Example 1.

Example 3

Fig. 17 is a configuration diagram of a power conversion device and a magnet motor according to Example 3. Example 1 employs a method in which the attenuation ratios $\zeta_a$ and $\zeta_b$ set in the secondary system transfer function filter 71 of the secondary system transfer function filter computation unit 7 are switched between the "control mode for suppressing pulsation in a speed" in the low-speed region and the "control mode for suppressing pulsation in torque" in the high-speed region by using a speed command value.

In this example, a low-power region is switched to the "control mode for suppressing pulsation in a speed" and a high-power region is switched to the "control mode for suppressing pulsation in torque" by using a power value. The magnet motor 1 to the speed control computation unit 6, and the phase error estimation computation unit 10 to the coordinate conversion unit 12 in Fig. 17 are the same as the constituent elements in Fig. 1.

In a vector control computation unit 9a, in addition to the computations of (Mathematical Formula 6) to (Mathematical Formula 8), effective power Pa, which is an inner product of the power of the magnet motor 1, is computed in accordance with (mathematical Formula 17) by using voltage command values $v_{dc}{}^{**}$ and $v_{qc}{}^{**}$, and current detection values $i_{dc}$ and $i_{qc}$ of the $d_c$-axis and $q_c$-axis.

[Mathematical Formula 17]

$$P_a = v_{dc}^{**} \cdot i_{dc} - v_{qc}^{**} \cdot i_{qc} \quad \text{---}(17)$$

Fig. 18 illustrates a block of a secondary system transfer function filter computation unit 7b. Here, 7b1, 7b2, and 7b4 shown in Fig. 2 are the same as the secondary system transfer function filter 71, the mechanical angular velocity conversion unit 72, and the attenuation ratio selection unit 74, and thus description thereof will be omitted.

A control mode selection unit 7b3 determines a low-power region and a high-power region in accordance with the magnitude of the effective power Pa. The control mode selection unit 7b3 selects the "control mode for suppressing pulsation in a speed" when it is determined as the low-power region, and the "control mode for suppressing pulsation in torque" when it is determined as the high-power region. Even when using this example in which switching is performed between the low-power region and the high-power region, highly stable, highly accurate, and highly efficient control characteristics can be realized as in Example 1.

Here, in the secondary system transfer function filter 7b1 of the secondary system transfer function filter computation unit 7b, the attenuation ratios $\zeta_a$ and $\zeta_b$ are switched between the low-power region and the high-power region, but two secondary system filters may be provided as in Example 2 for the low-power region and the high-power region, respectively.

Fig. 19 illustrates a block of a primary system transfer function filter computation unit 8a. Here, 8a1 is the same as the primary system transfer function filter 81 shown in Fig. 3, and thus description thereof will be omitted.

8a2 is a coefficient K that is multiplied by the magnitude of the effective power Pa to calculate the pulsating component $\omega_n$ equivalent. A primary progress time constant $T_a$ may be rewritten based on power information.

Example 4

Fig. 20 is a configuration diagram of a power conversion device, an IOT controller, and a magnet motor according to Example 4. In Example 1 to Example 3, the attenuation ratios $\zeta_a$ and $\zeta_b$ of the secondary system transfer function filter computation unit 7, the progress time constant $T_a$ of the primary system transfer function filter computation unit 8, and the switching speed $\omega_{chg}$ of the "control mode for suppressing pulsation in a speed" and the "control mode for suppressing pulsation in torque", or the switching power value are set in the controller (such as a microcomputer) of the power converter.

In this example, state quantities of the control (for example, the voltage command value, the current detection value, the phase error, and the first speed estimation value or the second speed estimation value) are fed back to an IOT controller 31 as a higher-level device. Then, the attenuation ratios $\zeta_a$ and $\zeta_b$, the progress time constant $T_a$, and the switching speed $\omega_{chg}$ learned by the IOT controller 31 through machine learning are reset to the secondary system transfer function filter computation unit 7 and the primary system transfer function filter computation unit 8 in this example.

A magnet motor 1 to a coordinate conversion unit 12 in Fig. 20 are the same as the constituent elements in Fig. 1. A reference numeral 31 represents an IOT controller that executes machine learning.

Even when using this example, highly stable, highly accurate, and highly efficient control characteristics can be realized as in Example 1 without adjustment.

Example 5

Fig. 21 is a configuration diagram of a power conversion device, a higher-level device, and a magnet motor according to Example 5. This example is applied to a magnet motor drive system. In the drawing, a magnet motor 1, and a coordinate conversion unit 5 to a coordinate conversion unit 12 which are constituent elements are the same as the constituent elements in Fig. 1.

The magnet motor 1 that is a constituent element in Fig. 1 is driven by a power conversion device 20. In the power conversion device 20, the coordinate conversion unit 5 to the coordinate conversion unit 12 in Fig. 1 are control units 20a.

The control unit 20a is constituted by a semiconductor integrated circuit (arithmetic control unit) such as a microcomputer and a digital signal processor (DSP). Some or all of functions of the control unit 20a can be constituted by hardware such as an application specific integrated circuit (ASIC) and a field programmable gate array (FPGA). A central processing unit (CPU) of the control unit 20a reads out a program stored in a recording device such as a memory, and executes processing of each unit such as the coordinate conversion unit 5.

The power converter 2 to the current detector 4 in Fig. 1 are mounted as hardware. In addition, parameters such as "$\omega_{chg}$ that is the low-speed/high-speed region switching speed 26", and "$\zeta_a$ and $\zeta_b$ which are attenuation ratios of the low-speed/high-speed region, and time constant $T_a$" of the control unit 20a can be set and changed by a higher-level device such as a digital operator 20b, a personal computer 28, a tablet 29, or a smartphone 30.

In a case where this example is applied to a compressor system driven by a magnet motor, it is possible to realize highly stable, highly accurate, and highly efficient control characteristics even in position sensorless vector control. In addition, "$\omega_{chg}$ that is the low-speed/high-speed region switching speed 26", and "$\zeta_a$ and $\zeta_b$ which are attenuation ratios of the low-speed/high-speed region, and time constant $T_a$" 27 may be set on a field bus such as a programmable logic controller, a local area network connected to a computer, and an IOT controller.

Furthermore, although this example has been disclosed by using Example 1, Example 2 to Example 4 may also be used.

According to this example, parameters to be set in the primary system transfer function filter computation unit and the secondary system transfer function filter computation unit can be set and changed from an outer side.

In Example 1 to Example 5, voltage correction values $\Delta v_{dc}$ and $\Delta v_{qc}$ are created from the current command values $i_q^*$ and $i_q^*$ and the current detection values $i_{dc}$, $i_{qc}$, and the voltage correction values are added to the voltage reference value for vector control as computation shown in (Mathematical Formula 8). Without limitation thereto, intermediate current command values $i_d^{**}$ and $i_q^{**}$ shown in (Mathematical Formula 18) used for vector control computation may be created from the current command values $i_d^*$ and $i_q^*$ and the current detection values $i_{dc}$, $i_{qc}$, and vector control computation shown in (Mathematical Formula 19) may be performed by using the speed estimation value $\omega_{dc}$ and the electric circuit parameters of the magnet motor 1.

[Mathematical Formula 18]

$$\left[ \begin{array}{l} i_d^{**} = (K_{pd1} + \dfrac{K_{id1}}{s})(i_d^* - i_{dc}) \\[4mm] i_q^{**} = (K_{pq1} + \dfrac{K_{iq1}}{s})(i_q^* - i_{qc}) \end{array} \right] \quad \text{---} (1\,8)$$

Here,

$K_{pd1}$: proportional gain of $d_c$-axis current control, $K_{id1}$: integral gain of $d_c$-axis current control,
$K_{pq1}$: proportional gain of $q_c$-axis current control, $k_{iq1}$: integral gain of $q_c$-axis current control, and
$T_d$: d-axis electrical time constant ($L_d/R$), $T_q$: q-axis electrical time constant ($L_q/R$).

[Mathematical Formula 19]

$$\begin{bmatrix} v_{dc}^{***} = R^* i_d^{**} - \omega_{dc} L_q^* \dfrac{1}{1+T_q s} i_q^{**} \\[4mm] v_{qc}^{***} = R^* i_q^{**} + \omega_{dc} L_d^* \dfrac{1}{1+T_d s} i_d^{**} + \omega_{dc} K e^{**} \end{bmatrix} \quad \text{---}(19)$$

Alternatively, from the current command values $i_d^*$ and $i_q^*$ and the current detection values $i_{dc}$ and $i_{qc}$, a voltage correction value $\Delta_{vd\_p}^*$ of a $d_c$-axis proportional computation component, a voltage correction value $\Delta_{vd\_i}^*$ of $d_c$-axis integral computation component, a voltage correction value $\Delta_{vq\_p}^*$ of $q_c$-axis proportional computation component, and a voltage correction value $\Delta_{vq\_i}^*$ of $q_c$-axis integral calculation component, which are used for vector control computation, are created in accordance with (Mathematical Formula 20). Then, vector control computation shown in (Mathematical Formula 21) may be performed by using the speed estimation value $\omega_{dc}$ and the electrical circuit parameters of the magnet motor 1.

[Mathematical Formula 20]

$$\begin{bmatrix} \Delta v_{d\_p}^* = K_{pd2}(i_d^* - i_{dc}) \\[3mm] \Delta v_{d\_i}^* = \dfrac{K_{id2}}{s}(i_d^* - i_{dc}) \\[3mm] \Delta v_{q\_p}^* = K_{pq2}(i_q^* - i_{qc}) \\[3mm] \Delta v_{q\_i}^* = \dfrac{K_{iq2}}{s}(i_q^* - i_{qc}) \end{bmatrix} \quad \text{---}(20)$$

Here,

$K_{pd2}$: proportional gain of $d_c$-axis current control, $K_{id2}$: integral gain of $d_c$-axis current control,
$K_{pq2}$: proportional gain of $q_c$-axis current control, $k_{iq2}$: integral gain of $q_c$-axis current control.

[Mathematical Formula 21]

$$\begin{bmatrix} v_{dc}^{****} = (\Delta v_{d\_p}^* + \Delta v_{d\_i}^*) - \omega_{dc} \dfrac{L_q^*}{R^*} \Delta v_{q\_i}^* \\[4mm] v_{qc}^{****} = (\Delta v_{q\_p}^* + \Delta v_{q\_i}^*) + \omega_{dc} \dfrac{L_d^*}{R^*} \Delta v_{d\_i}^* + \omega_{dc} K_e^* \end{bmatrix} \quad \text{---}(21)$$

In addition, vector control computation shown in (Mathematical Formula 22) may be performed by using a primary delay signal $i_{qctd}$ of the $d_c$-axis current command value $i_d^*$ and a $q_c$-axis current detection value $i_{qc}$, the speed estimation value $\omega_{dc}$, and the electrical circuit parameters of the magnet motor 1.

[Mathematical Formula 22]

$$\begin{bmatrix} v_{dc}^{*****} = R^* i_d^* - \omega_{dc} L_q^* i_{qctd} \\[4mm] v_{qc}^{*****} = R^* i_{qctd} + \omega_{dc} L_d^* i_d^* + \omega_{dc} {}'K_e^* \end{bmatrix} \quad \text{---}(22)$$

Note that, in Example 1 to Example 5, switching elements constituting the power converter 2 may be silicon (Si) semiconductor elements or wide band gap semiconductor elements such as silicon carbide (SiC) and gallium nitride (GaN).

REFERENCE SIGNS LIST

| | |
|---|---|
| 1 | Magnet motor |
| 2 | Power converter |
| 3 | DC power supply |
| 4 | Current detector |
| 5 | Coordinate conversion unit |
| 6 | Speed control computation unit |
| 7 | Secondary system transfer function filter computation unit |
| 8 | Primary system transfer function filter computation unit |
| 9 | Vector control computation unit |
| 10 | Phase error estimation computation unit |
| 11 | Frequency phase estimation computation unit |
| 12 | Coordinate conversion unit |
| 20 | Power conversion device |
| 20a | Control unit |
| 20b | Digital operator of power conversion device |
| 26 | Low-speed region/high-speed region switching speed |
| 27 | Attenuation ratio set to high-speed region/low-speed region |
| 28 | Personal computer |
| 29 | Tablet |
| 30 | Smartphone |
| 31 | IOT controller |
| $i_d{}^*$ | D-axis current command value |
| $i_q{}^*$ | Q-axis current command value |
| $\omega_{dc}$ | Speed estimation value |
| $\omega_n$ | Mechanical angular velocity |
| $\omega_r$ | Speed of magnet motor 1 |
| $d_{dc}{}^*, v_{dc}{}^{**}, v_{dc}{}^{**}, v_{dc}{}^{***}, v_{dc}{}^{****}, v_{dc}{}^{*****}$ | D-axis voltage command value |
| $v_{qc}{}^*, v_{qc}{}^{**}, v_{qc}{}^{***}, v_{qc}{}^{****}, v_{qc}{}^{*****}$ | Q-axis voltage command value |
| P | Power value |
| Pa | Effective power value |
| $\Delta\theta_c$ | Phase error estimation value |
| $\zeta_a, \zeta_b$ | Attenuation ratio |
| $T_a$ | Primary progress time constant |

**Claims**

1.  A power conversion device that drives a magnet motor, comprising:

    a first filter unit that includes a primary system transfer function filter that varies in correspondence with a pulsating component of the magnet motor, and computes a second speed estimation value from a speed command value and a first speed estimation value;
    a speed control unit that computes a first torque current command value from the speed command value and the second speed estimation value; and
    a second filter unit that includes a secondary system transfer function filter that varies in correspondence with the pulsating component, and computes a second torque current command value from the first torque current command value,
    wherein power to be supplied to the magnet motor is controlled on the basis of the second torque current command value.

2.  The power conversion device according to claim 1,

wherein the first filter unit has a parameter relating to the speed command value, and
computation including the parameter is performed from the first speed estimation value to obtain the second speed estimation value.

3. The power conversion device according to claim 1,

   wherein the second filter unit includes,
   a control mode for suppressing pulsation in a speed, and a control mode for suppressing pulsation in torque.

4. The power conversion device according to claim 1,

   wherein the second filter unit includes,
   a first secondary system transfer function filter and a second secondary system transfer function filter, and
   switching between the first secondary system transfer function filter and the second secondary system transfer function filter is performed on the basis of the speed command value.

5. The power conversion device according to claim 1,

   wherein the second filter unit,
   switches a mode to a control mode for suppressing pulsation in a motor speed when the magnet motor is in a low-speed region, and
   switches the mode to a control mode for suppressing pulsation in motor torque when the magnet motor is in a high-speed region.

6. The power conversion device according to claim 3,

   wherein the second filter unit,
   switches a mode to either the control mode for suppressing pulsation in a speed or the control mode for suppressing pulsation in torque in correspondence with the magnitude of a power computation value calculated from a voltage command value and a current detection value.

7. The power conversion device according to claim 6,

   wherein the second filter unit,
   switches a mode to the control mode for suppressing pulsation in a motor speed when the magnet motor is in a low-power region, and
   switches the mode to the control mode for suppressing pulsation in motor torque when the magnet motor is a high-power region.

8. The power conversion device according to claim 1,

   wherein a voltage command value, a current detection value, and a control amount including a phase error, a first speed estimation value, or a second speed estimation value are fed back to a higher-level device for analysis, and
   a parameter of the primary system transfer function filter or the secondary system transfer function filter is corrected.

9. The power conversion device according to claim 1,
   wherein a speed value for switching a control mode of the magnetic motor between a low-speed region and a high-speed region, a power value for switching a control mode of the magnet motor between a low-power region and a high-power region, or a parameter of the primary system transfer function filter is set or changed from an outer side.

10. The power conversion device according to claim 1,

    wherein the first filter unit,
    changes a parameter of the primary system transfer function filter in correspondence with the speed command value or a power value.

EP 4 625 808 A1

F I G. 2

F I G. 3

$\omega_r^*$

$\omega_{dc}$

8

81

$$\frac{Ta\,S + 1}{Tb\,S + 1}$$

$\omega_{dc}'$

F I G. 4

GAIN
dB

CONTROL MODE FOR
SUPPRESSING PULSATION IN SPEED

0

WITHOUT SUPPRESSION CONTROL

CONTROL MODE FOR SUPPRESSING
PULSATION IN TORQUE

$\omega_n/2\pi$
(PULSATING COMPONENT)
FREQUENCY Hz

## F I G. 5

LOAD PULSATING TORQUE

MOTOR TORQUE

60%

(%)

TIME

SPEED COMMAND VALUE

MOTOR SPEED

(%)

TIME

TIME A

## F I G. 6

LOAD PULSATING TORQUE

MOTOR TORQUE

100%

(%)

TIME

SPEED COMMAND VALUE

MOTOR SPEED

(%)

TIME

TIME B

## F I G . 7

LOAD PULSATING TORQUE

MOTOR TORQUE

AMPLITUDE VALUE INCREASES (UNSTABLE)

100

(%) 50

0

TIME

SPEED COMMAND VALUE

MOTOR SPEED

(%) 50

0

TIME C

TIME

TIME D

## F I G . 8

GAIN dB

$\omega_n/2\pi$

POINT E

POINT F

0

$\omega_n/2\pi$
(PULSATING COMPONENT)

FREQUENCY Hz

90

PHASE deg

−90

PHASE MARGIN ABSENT

−180

−180

POINT G

$\omega_n/2\pi$
(PULSATING COMPONENT)

FREQUENCY Hz

## F I G. 9

## F I G. 1 0

# F I G. 1 1

LOAD PULSATING TORQUE 100%    MOTOR TORQUE

72%

(%)

TIME

90

(%)    SPEED COMMAND VALUE    MOTOR SPEED

0

TIME    TIME L

# F I G. 1 2

LOAD PULSATING TORQUE    MOTOR TORQUE

100%

52%

TIME

90

SPEED COMMAND VALUE    MOTOR SPEED

0

TIME

F I G. 1 3

F I G. 1 4

F I G . 1 5

EP 4 625 808 A1

F I G. 1 6

EP 4 625 808 A1

7b

7b1

$$\frac{1/\omega_n{}^2 S^2 + 2\zeta_a/\omega_n S + 1}{1/\omega_n{}^2 S^2 + 2\zeta_b/\omega_n S + 1}$$

$i_{q0}{}^*$

$i_q{}^*$

$\omega_n$

$\zeta_a , \zeta_b$

7b2

$\omega_r{}^*$

$1/P_m$

7b3

7b4

$P_a$

CONTROL
MODE
SELECTION
UNIT

ATTENUATION
RATIO
SELECTION
UNIT

EP 4 625 808 A1

26

F I G. 1 9

F I G . 2 1

## INTERNATIONAL SEARCH REPORT

| International application No. |
| --- |
| **PCT/JP2023/023716** |

**A. CLASSIFICATION OF SUBJECT MATTER**

*H02P 21/05*(2006.01)i; *H02P 27/06*(2006.01)i; *H02M 7/48*(2007.01)i
FI:   H02P21/05; H02P27/06; H02M7/48 E

According to International Patent Classification (IPC) or to both national classification and IPC

**B. FIELDS SEARCHED**

Minimum documentation searched (classification system followed by classification symbols)

H02P21/05; H02P27/06; H02M7/48

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2019-213389 A (CORONA CORP) 12 December 2019 (2019-12-12)<br>paragraphs [0013]-[0053], fig. 1-7 | 1-10 |
| A | JP 7-177778 A (MATSUSHITA ELECTRIC IND CO LTD) 14 July 1995 (1995-07-14)<br>paragraphs [0023]-[0040], fig. 1-4 | 1-10 |
| A | WO 2022/239307 A1 (HITACHI INDUSTRY EQUIPMENT SYSTEMS CO LTD) 17<br>November 2022 (2022-11-17)<br>paragraphs [0012]-[0121], fig. 1-16 | 1-10 |

☐ Further documents are listed in the continuation of Box C.   ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **07 August 2023** | **29 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/023716**

| Patent document cited in search report | | | Publication date (day/month/year) | Patent family member(s) | Publication date (day/month/year) |
|---|---|---|---|---|---|
| JP | 2019-213389 | A | 12 December 2019 | (Family: none) | |
| JP | 7-177778 | A | 14 July 1995 | (Family: none) | |
| WO | 2022/239307 | A1 | 17 November 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006191737 A